(19)

Europäisches Patentamt
European Patent Office
Office européen des brevets

(11) **EP 4 202 714 A1**

(12) **EUROPEAN PATENT APPLICATION**
published in accordance with Art. 153(4) EPC

(43) Date of publication:
**28.06.2023 Bulletin 2023/26**

(21) Application number: **20954684.5**

(22) Date of filing: **27.09.2020**

(51) International Patent Classification (IPC):
**G06F 16/00** (2019.01)

(52) Cooperative Patent Classification (CPC):
**G06F 16/00**

(86) International application number:
**PCT/CN2020/118172**

(87) International publication number:
**WO 2022/061833 (31.03.2022 Gazette 2022/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Aktiengesellschaft**
**80333 München (DE)**

(72) Inventors:
• **CHE, Xiaoyin**
  **Beijing 100097 (CN)**

• **HUI, Haotian**
  **Suzhou, Jiangsu 215000 (CN)**
• **SHENG, Ruogu**
  **Beijing 100102 (CN)**
• **WANG, Ganghua**
  **Suzhou, Jiangsu 223200 (CN)**
• **LU, Ting**
  **Suzhou, Jiangsu 215000 (CN)**

(74) Representative: **Isarpatent**
**Patent- und Rechtsanwälte Barth**
**Charles Hassa Peckmann & Partner mbB**
**Friedrichstrasse 31**
**80801 München (DE)**

(54) **TEXT SIMILARITY DETERMINATION METHOD AND APPARATUS AND INDUSTRIAL DIAGNOSIS METHOD AND SYSTEM**

(57)    A text similarity determination method and apparatus and an industrial diagnosis method and system. The method comprises: segmenting a first text to generate a number m of sentences, where m is a positive integer (101); segmenting a second text to generate a number n of sentences, where n is a positive integer (102); determining m*n first sentence pairs, wherein each of the first sentence pairs comprises any one of the m sentences and any one of the n sentences (103); determining a correlation coefficient between two sentences in each of the m*n first sentence pairs (104); and on the basis of the correlation coefficients of the m*n first sentence pairs, determining the similarity between the first text and the second text (105). Text similarity can be determined without setting handwriting rules, reducing cost. Correlation coefficients at the sentence level can also be determined, which is particularly suitable for an industrial diagnosis system.

Fig. 1

## Description

## Technical Field

The present invention relates to the technical field of natural language processing, and in particular to a text similarity determination method and apparatus and to an industrial diagnosis method and system.

## Background Art

It is still difficult to completely avoid failures in modern industrial production scenarios. With the rapid spread of the concept of industrial digitalization, many plants or comprehensive industrial companies usually record failures in their daily operation. Text descriptions containing failure symptoms, causes and solutions are usually maintained in a database of historical cases. When a new fault event occurs, the database of historical cases can be searched for relevant historical cases, and then the recorded solutions can be taken as a reference to assist in handling the new fault event.

US Patent No. 5463768 records a method and a system for the analysis and diagnosis of error logs. In the disclosure of the patent, features of failure cases are extracted based on specific handwritten patterns to form representative vectors of failure cases, and then the similarity between different cases is evaluated by calculating the mathematical distance between corresponding vectors.

However, a high level of domain knowledge is required to set specific handwritten patterns, which often means high labor costs.

## Summary of the Invention

The embodiments of the present invention propose a text similarity determination method and apparatus and an industrial diagnosis method and system, which can determine text similarity without setting handwritten patterns, thus saving costs.

In a first aspect, a text similarity determination method is provided, comprising:

Segmenting a first text to generate $m$ sentences, wherein $m$ is a positive integer;
Segmenting a second text to generate $n$ sentences, wherein $n$ is a positive integer;
Determining $m*n$ first sentence pairs, wherein each of the first sentence pairs comprises any sentence in the $m$ sentences and any sentence in the $n$ sentences;
Determining the correlation coefficient between the two sentences in each of the first sentence pairs in the $m*n$ first sentence pairs;
Determining the similarity between the first text and the second text based on the correlation coefficients of the $m*n$ first sentence pairs.

It can be seen that, in the embodiments of the present invention, the similarity of the two sentences in a first sentence pair comprising any sentence segmented from a first text and any sentence segmented from a second text is calculated, then the correlation coefficients of all the first sentence pairs are used to calculate the similarity between the first text and the second text, and the text similarity can be determined without setting handwritten patterns, thus eliminating the harsh requirement for high-level domain knowledge, thereby lowering costs.

In addition, compared with the similarity analysis directly on the level of text (a text usually containing a plurality of sentences) in the prior art, in the embodiments of the present invention, a text is segmented into sentences before the correlation coefficient of a sentence pair formed by sentences from compared texts is determined, and then the similarity between the texts is determined according to the correlation coefficients, making it possible to determine whether the texts are semantically correlated at the sentence level, for correlation analysis with a finer granularity, thus improving the accuracy of the calculated text similarity.

In addition, in the embodiments of the present invention, correlation analysis is performed based on sentence pairs instead of direct comparison between texts, and therefore it is not sensitive to the difference in text length and is suitable for similarity calculation between texts of various lengths, thus achieving wider applicability.

Preferably, before determining the correlation coefficient of each sentence pair in the $m*n$ first sentence pairs, the method further comprises:

Automatically labeling second sentence pairs as training data;
Using the second sentence pairs that have been automatically labeled to train a pre-trained natural language model, to obtain a sentence correlation model;

Determining the correlation coefficient between the two sentences in each of the first sentence pairs in the $m*n$ first sentence pairs comprises: determining the correlation coefficient between the two sentences in each of the sentence pairs in the $m*n$ first sentence pairs based on the sentence correlation model.

It can be seen that, in the embodiments of the present invention, a pre-trained natural language model is trained to obtain a sentence correlation model, and then the sentence correlation model is used to determine the correlation coefficients of the first sentence pairs, thus improving the processing efficiency.

Preferably, automatically labeling second sentence pairs as training data comprises:
When the two sentences in a second sentence pair belong to an identical text, automatically labeling the second sentence pair as a positive example;

When the two sentences in a second sentence pair do not belong to an identical text, automatically labeling the second sentence pair as a negative example.

Therefore, in the embodiments of the present invention, the second sentence pairs can be quickly labeled by determining whether two sentences in a second sentence pair belong to the same text, thereby providing a fast automatic labeling method and improving the labeling efficiency.

Preferably, determining the similarity between the first text and the second text based on the correlation coefficients of the $m*n$ first sentence pairs comprises at least one of the following:

Determining the arithmetic mean of the correlation coefficients of the $m*n$ first sentence pairs as the similarity between the first text and the second text;
Determining the median of the correlation coefficients of the $m*n$ first sentence pairs as the similarity between the first text and the second text;
Determining the maximum value of the correlation coefficients of the $m*n$ first sentence pair as the similarity between the first text and the second text;
Determining the maximum value of the correlation coefficients of $n$ first sentence pairs that contain any identical sentence in the $m$ sentences, and determining the arithmetic mean of the $m$ maximum values corresponding to the respective identical sentences as the similarity between the first text and the second text.

It can be seen that, in the embodiments of the present invention, the similarity between a first text and a second text can be calculated in a plurality of ways, thus providing a wide application scope and making it easy for users to choose.

In a second aspect, a text similarity determination apparatus is provided, comprising:

A first segmenting module, used to segment a first text to generate $m$ sentences, wherein $m$ is a positive integer;
A second segmenting module, used to segment a second text to generate $n$ sentences, wherein $n$ is a positive integer;
A sentence pair determining module, used to determine $m*n$ first sentence pairs, wherein each of the first sentence pairs comprises any sentence in the $m$ sentences and any sentence in the n sentences;
A correlation coefficient determining module, used to determine the correlation coefficient between the two sentences in each of the first sentence pairs in the $m*n$ first sentence pairs;
A similarity determining module, used to determine the similarity between the first text and the second text based on the correlation coefficients of the $m*n$ first sentence pairs.

It can be seen that, in the embodiments of the present invention, the similarity of the two sentences in a first sentence pair comprising any sentence segmented from a first text and any sentence segmented from a second text is calculated, then the correlation coefficients of all the first sentence pairs are used to calculate the similarity between the first text and the second text, and the text similarity can be determined without setting handwritten patterns, thus eliminating the harsh requirement for high-level domain knowledge, thereby lowering costs.

In addition, compared with the similarity analysis directly on the level of text (a text usually containing a plurality of sentences) in the prior art, in the embodiments of the present invention, a text is segmented into sentences before the correlation coefficient of a sentence pair formed by sentences from compared texts is determined, and then the similarity between the texts is determined according to the correlation coefficients, making it possible to determine whether the texts are semantically correlated at the sentence level, for correlation analysis with a finer granularity, thus improving the accuracy of the calculated text similarity. In addition, in the embodiments of the present invention, correlation analysis is performed based on sentence pairs instead of direct comparison between texts, and therefore it is not sensitive to the difference in text length and is suitable for similarity calculation between texts of various lengths, thus achieving wider applicability.

Preferably, the apparatus further comprises:

A labeling module, used to automatically label second sentence pairs as training data before the correlation coefficient determining module determines the correlation coefficient of each of the first sentence pairs in the $m*n$ first sentence pairs;

A training module, used to use the second sentence pairs that have been automatically labeled to train a pre-trained natural language model, to obtain a sentence correlation model;

The correlation coefficient determining module is used to determine the correlation coefficient between the two sentences in each of the first sentence pairs in the $m*n$ first sentence pairs based on the sentence correlation model.

It can be seen that, in the embodiments of the present invention, a pre-trained natural language model is trained to obtain a sentence correlation model, and then the sentence correlation model is used to determine the correlation coefficients of the first sentence pairs, thus improving the processing efficiency.

Preferably, the labeling module is used to, when the two sentences in a second sentence pair belong to an identical text, automatically label the second sentence pair as a positive example; and when the two sentences in a second sentence pair do not belong to an identical text, automatically label the second sentence pair as a negative example.

Therefore, in the embodiments of the present invention, the second sentence pairs can be quickly labeled by determining whether two sentences in a second sentence pair belong to the same text, thereby providing a fast automatic labeling method and improving the labeling efficiency.

Preferably, the similarity determining module is used to perform at least one of the following:

Determining the arithmetic mean of the correlation coefficients of the $m*n$ first sentence pairs as the similarity between the first text and the second text;

Determining the median of the correlation coefficients of the $m*n$ first sentence pairs as the similarity between the first text and the second text;

Determining the maximum value of the correlation coefficients of the $m*n$ first sentence pair as the similarity between the first text and the second text;

Determining the maximum value of the correlation coefficients of $n$ first sentence pairs that contain any identical sentence in the $m$ sentences, and determining the arithmetic mean of the $m$ maximum values corresponding to the respective identical sentences as the similarity between the first text and the second text.

It can be seen that, in the embodiments of the present invention, the similarity between a first text and a second text can be calculated in a plurality of ways, thus providing a wide application scope and making it easy for users to choose.

In a third aspect, an industrial diagnosis system is provided, comprising:

A human-machine interface, used to receive an inquiry case text;

A historical case database, used to store $K$ historical case texts, wherein $K$ is a positive integer;

A processor, coupled respectively to the human-machine interface and the historical case database, and configured to: Segment the inquiry case text to generate $m$ sentences, wherein $m$ is a positive integer; segment $k$ historical case texts to generate $n_k$ sentences, wherein $n_k$ is a positive integer, and the value range of $k$ is [1, $K$]; determine $m*n_k$ first sentence pairs, wherein each of the first sentence pairs comprises any sentence in the $m$ sentences and any sentence in the $n_k$ sentences; determine the correlation coefficient between the two sentences in each of the first sentence pairs in the $m*n_k$ first sentence pairs; determine the similarity between the inquiry case text and the $k$th historical case text based on the correlation coefficients of the $m*n_k$ first sentence pairs; rank the similarities between the inquiry case text and the $K$ historical case texts; and determine the historical case text from the $K$ historical case texts as the output based on the ranking result.

It can be seen that, in the embodiments of the present invention, the similarity of the two sentences in a first sentence pair comprising any sentence segmented from an inquiry case text and any sentence segmented from a historical case text is calculated, then the correlation coefficients of all the first sentence pairs are used to calculate the similarity between the inquiry case text and the historical case text, and the text similarity can be determined without setting handwritten patterns, thus eliminating the harsh requirement for high-level domain knowledge, thereby lowering costs.

In addition, compared with the similarity analysis directly on the level of text (a text usually containing a plurality of sentences) in the prior art, in the embodiments of the present invention, a text is segmented into sentences before the correlation coefficient of a sentence pair formed by sentences from compared texts is determined, and then the similarity between the texts is determined according to the correlation coefficients, making it possible to determine whether the texts are semantically correlated at the sentence level, for correlation analysis with a finer granularity, thus improving the accuracy of the calculated text similarity. The retrieved historical case text is more related to the inquiry case text, which is conducive to the rapid processing of industrial faults.

In addition, in the embodiments of the present invention, correlation analysis is performed based on sentence pairs instead of direct comparison between texts, and therefore it is not sensitive to the difference in text length and is suitable for similarity calculation between texts of various lengths, thus achieving wider applicability.

Preferably, the processor is configured to:

Automatically label second sentence pairs as training data; and use the second sentence pairs that have been automatically labeled to train a pre-trained natural language model, to obtain a sentence correlation model;

Determining the correlation coefficient between the two sentences in each of the first sentence pairs in the $m*n_k$ first sentence pairs comprises: determining the correlation coefficient between the two sentences in each of the sentence pairs in the $m*n_k$ first sentence pairs based on the sentence correlation model.

It can be seen that, in the embodiments of the present invention, a pre-trained natural language model is trained to obtain a sentence correlation model, and then the sentence correlation model is used to determine the correlation coefficients of the first sentence pairs, thus improving the processing efficiency.

Preferably, the processor is also configured to: when the two sentences in a second sentence pair belong to an identical text, automatically label the second sentence pair as a positive example; and when the two sentences in a second sentence pair do not belong to an identical text, automatically label the second sentence pair as a negative example.

Therefore, in the embodiments of the present invention, the second sentence pairs can be quickly labeled by determining whether two sentences in a second sentence pair belong to the same text, thereby providing a fast automatic labeling method and improving the labeling efficiency.

Preferably, the processor is also configured to perform at least one of the following:

When $m$ is greater than the average sentence number $t$ of the $K$ historical case texts, determining the arithmetic mean of the correlation coefficients of the $m*n_k$ first sentence pairs as the similarity between the first text and the second text;

Determining the median of the correlation coefficients of the $m*n_k$ first sentence pairs as the similarity between the first text and the second text;

Determining the maximum value of the correlation coefficients of the $m*n_k$ first sentence pair as the similarity between the first text and the second text;

When $m$ is smaller than or equal to the average sentence number $t$ of the $K$ historical case texts, determining the maximum value of the correlation coefficients of $n$ first sentence pairs that contain any identical sentence in the $m$ sentences, and determining the arithmetic mean of the $m$ maximum values corresponding to the respective identical sentences as the similarity between the first text and the second text.

It can be seen that, in the embodiments of the present invention, the similarity between an inquiry case text and a historical case text can be calculated in a plurality of ways, thus providing a wide application scope and making it easy for users to choose.

In a fourth aspect, an industrial diagnosis method is provided, comprising:

Receiving an inquiry case text;

Obtaining $K$ historical case texts from a historical case database, wherein $K$ is a positive integer;

Segmenting the inquiry case text to generate $m$ sentences, wherein $m$ is a positive integer;

segmenting $k$ historical case texts to generate $n_k$ sentences, wherein $n_k$ is a positive integer;

Determining $m*n_k$ first sentence pairs, wherein each of the first sentence pairs comprises any sentence in the $m$ sentences and any sentence in the $n_k$ sentences;

Determining the correlation coefficient between the two sentences in each of the first sentence pairs in the $m*n_k$ first sentence pairs;

Determining the similarity between the inquiry case text and the $k$th historical case text based on the correlation coefficients of the $m*nk$ first sentence pairs;

Ranking the similarities between the inquiry case text and the $K$ historical case texts;

Determining the historical case text from the $K$ historical case texts as the output based on the ranking result.

It can be seen that, in the embodiments of the present invention, the similarity of the two sentences in a first sentence pair comprising any sentence segmented from an inquiry case text and any sentence segmented from a historical case text is calculated, then the correlation coefficients of all the first sentence pairs are used to calculate the similarity between the inquiry case text and the historical case text, and the text similarity can be determined without setting handwritten patterns, thus eliminating the harsh requirement for high-level domain knowledge, thereby lowering costs.

In addition, in the embodiments of the present invention, the similarity between text is determined by the correlation coefficients of sentence pairs, making it possible to determine whether the texts are semantically correlated at the sentence level, thus improving the accuracy of the calculated text similarity. The retrieved historical case text is more related to the inquiry case text, which is conducive to the rapid processing of industrial faults.

Preferably, before determining the correlation coefficient of each sentence pair in the $m*n$ first sentence pairs, the method further comprises:

Automatically labeling second sentence pairs as training data;

Using the second sentence pairs that have been automatically labeled to train a pre-trained natural language model, to obtain a sentence correlation model;

Determining the correlation coefficient between the two sentences in each of the first sentence pairs in the $m*n$ first sentence pairs comprises: determining the correlation coefficient between the two sentences in each of the sentence pairs in the $m*n$ first sentence pairs based on the sentence correlation model.

It can be seen that, in the embodiments of the present invention, a pre-trained natural language model is trained to obtain a sentence correlation model, and then the sentence correlation model is used to determine the correlation coefficients of the first sentence pairs, thus improving the processing efficiency.

Preferably, automatically labeling second sentence pairs as training data comprises at least one of the following:

When the two sentences in a second sentence pair belong to an identical text, automatically labeling the second sentence pair as a positive example;

When the two sentences in a second sentence pair do not belong to an identical text, automatically labeling the second sentence pair as a negative example.

Therefore, in the embodiments of the present invention, the second sentence pairs can be quickly labeled by determining whether two sentences in a second sentence pair belong to the same text, thereby providing a fast automatic labeling method and improving the labeling efficiency.

Preferably, determining the similarity between the inquiry case text and the $k$th historical case text based on the correlation coefficients of the $m*n_k$ first sentence pairs comprises:

When $m$ is greater than the average sentence number $t$ of the $K$ historical case texts, determining the arithmetic mean of the correlation coefficients of the $m*n_k$ first sentence pairs as the similarity between the first text and the second text;

Determining the median of the correlation coefficients of the $m*n_k$ first sentence pairs as the similarity between the first text and the second text;

Determining the maximum value of the correlation coefficients of the $m*n_k$ first sentence pair as the similarity between the first text and the second text;

When $m$ is smaller than or equal to the average sentence number $t$ of the $K$ historical case texts, determining the maximum value of the correlation coefficients of n first sentence pairs that contain any identical sentence in the $m$ sentences, and determining the arithmetic mean of the $m$ maximum values corresponding to the respective identical sentences as the similarity between the first text and the second text.

It can be seen that, in the embodiments of the present invention, the similarity between an inquiry case text and a historical case text can be calculated in a plurality of ways, thus providing a wide application scope and making it easy for users to choose.

In a fifth aspect, a text similarity determination apparatus is provided, comprising a processor and a memory;

The memory stores an application program that can be executed by the processor, which is used to cause the processor to execute the text similarity determination method as described in any of the above paragraphs.

In a sixth aspect, a computer-readable storage medium is provided, wherein a computer-readable instruction is stored therein, and the computer-readable instruction is used to execute the text similarity determination method as described in any of the above paragraphs.

**Description of the Drawings**

Figure 1 is an exemplary flowchart of the text similarity determination method of the embodiments of the present invention.

Figure 2 is an exemplary structural diagram of the text similarity determination apparatus of the embodiments of the present invention.

Figure 3 is an exemplary structural diagram of the industrial diagnosis system of the embodiments of the present invention.

Figure 4 is an exemplary flowchart of the industrial diagnosis method of the embodiments of the present invention.

Figure 5 is an exemplary processing diagram of the industrial diagnosis process based on searching of the embodiments of the present invention.

Figure 6 is an exemplary structural diagram of the text similarity determination apparatus of the embodiments of the present invention.

In the drawings, the following reference numerals are used:

| Numeral | Meaning |
| --- | --- |
| 100 | Text similarity determination method |
| 101-105 | Steps |
| 200 | Text similarity determination apparatus |
| 201 | First segmenting module |
| 202 | Second segmenting module |
| 203 | Sentence pair determining module |
| 204 | Correlation coefficient determining module |
| 205 | Similarity determining module |
| 30 | Industrial diagnosis system |
| 31 | Human-machine interface |
| 32 | Historical case database |
| 33 | Processor |
| 34 | Bus |
| 400 | Industrial diagnosis method |
| 401-409 | Steps |
| 50 | Model training stage |
| 60 | Application stage |
| 51 | Pre-trained natural language model |
| 52 | Sentence correlation model |
| 53 | Historical case database |
| 54 | Second sentence pair |
| 62 | Inquiry case text |
| 63 | First sentence pair |
| 64 | Correlation coefficient of a first sentence pair |
| 65 | Text similarity |
| 66 | Output similar historical case text |
| 600 | Text similarity determination apparatus |
| 601 | Processor |
| 602 | Memory |

**Specific Embodiments**

The present invention is further described in detail with reference to the drawings and the embodiments, so that its technical solution and advantages become clearer. It should be understood that the specific embodiments described here are only used to illustratively explain the present invention and are not configured to limit the scope of the present invention.

In order to be concise and intuitive in the description, the solution of the present invention is described below with reference to several representative embodiments. The large amount of details in the embodiments are only configured to help to understand the solution of the present invention. However, it is obvious that the technical solution of the present invention may not be limited to these details. In order to avoid unnecessarily obscuring the solution of the present invention, some embodiments are not described in detail, but only a framework is given. Hereinafter, "including" means "including but not limited to", and "according to..." means "at least according to..., but not limited to...". Due to Chinese language habits, when the quantity of an element is not specified hereinafter, it means that there may be one or several of the element, or it can be understood as there is at least one of it.

The applicant has found many disadvantages in the processing method in the prior art where features of failure cases are extracted based on specific handwritten patterns to form representative vectors of failure cases and then the similarity between different cases is evaluated by calculating the mathematical distance between corresponding vectors. For example, a high level of domain knowledge is required to set specific handwritten patterns, which often means high labor costs. Moreover, different cases may differ greatly in their length. It is not appropriate to represent all cases by vectors in the same format/dimension. In addition, features extracted by general statistical analysis, for example, n-grams or sequences of N items in a given text, tend to be lexically sensitive but not semantically sensitive, and as a result a retrieved case is similar only in the wording but not semantically.

In view of the many disadvantages in the prior art of extracting features based on specific handwritten patterns to determine the similarity between different cases, the applicant proposes a technical solution for determining text similarity based on the correlation coefficient of sentence pairs, which can overcome or mitigate one or more of the above disadvantages of the prior art.

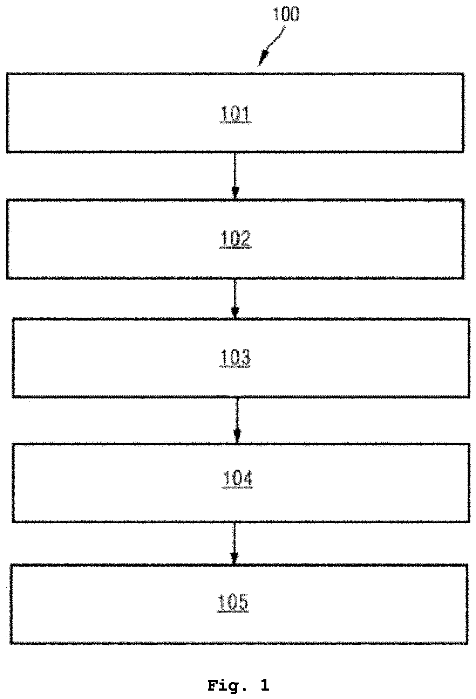

Figure 1 is an exemplary flowchart of the text similarity determination method of the embodiments of the present invention.

As shown in Figure 1, the method comprises:

Step 101: segmenting a first text to generate $m$ sentences, wherein $m$ is a positive integer.

Here, the first text may be segmented to generate $m$ sentences in a plurality of ways. For example, in one embodiment, word segmentation is performed on the first text, to generate a word segment sequence corresponding to the first text. The part of speech of each word segment in the word segment sequence of the first text is determined, and the word segment sequence is segmented to generate $m$ sentences according to the part of speech of each word segment. Thus, $m$ sentences are generated according to the parts of speech of the word segments after word segmentation is performed on the first text.

Step 102: segmenting a second text to generate $n$ sentences, wherein $n$ is a positive integer.

Similarly, the second text may be segmented to generate $n$ sentences in a plurality of ways. For example, in one embodiment, word segmentation is performed on the second text, to generate a word segment sequence corresponding to the second text. The part of speech of each word segment in the word segment sequence of the second text is determined, and the word segment sequence is segmented to generate $n$ sentences according to the part of speech of each word segment. Thus, $n$ sentences are generated according to the parts of speech of the word segments after word segmentation is performed on the second text.

The above exemplarily describes some typical examples of segmenting a first text and a second text. Those skilled in the art may realize that this description is exemplary and is not used to limit the scope of the embodiments of the present invention. In fact, existing mature methods for sentence segmentation and novel methods that will appear in the future should be covered by the scope of the embodiments of the present invention.

Specifically, the execution sequence of Step 101 and Step 102 is not strictly restricted. For example: Step 102 may be performed after Step 101, Step 102 may be performed before Step 101, and Step 101 and Step 102 may also be performed simultaneously.

Step 103: determining $m*n$ first sentence pairs, wherein each of the first sentence pairs comprises any sentence in the $m$ sentences and any sentence in the $n$ sentences.

Here, the $m$ sentences of the first text generated in Step 101 and the $n$ sentences of the second text generated in Step 102 are combined to form $m*n$ sentence pairs, referred to as $m*n$ first sentence pairs. Each of the first sentence pairs comprises any sentence in the $m$ sentences and any sentence in the $n$ sentences.

For example, assume that the first text is segmented into 3 sentences, namely sentence *a1,* sentence *a2,* and sentence *a3*; the second text is segmented into 4 sentences, namely sentence *b1*, sentence *b2*, sentence *b3*, and sentence *b4.* Therefore, 3*4 (12) first sentence pairs can be determined, which are: sentence pair (*a1, b1*), sentence pair (*a1, b2*), sentence pair (*a1, b3*), sentence pair (*a1, b4*), sentence pair (*a2, b1*), sentence pair (*a2, b2*), sentence pair (*a2, b3*), sentence pair (*a2, b4*), sentence pair (*a3, b1*), sentence pair (*a3, b2*), sentence pair (*a3, b3*), and sentence pair (*a3, b4*).

Step 104: determining the correlation coefficient between the two sentences in each of the first sentence pairs in the *m\*n* first sentence pairs.

Preferably, a sentence correlation model may be used to determine the correlation coefficient between the two sentences in each of the first sentence pairs in the *m\*n* first sentence pairs. Specifically, before Step 104, the method 100 further comprises: automatically labeling second sentence pairs as training data; and using the second sentence pairs that have been automatically labeled to train a pre-trained natural language model, to obtain a sentence correlation model; determining the correlation coefficient between the two sentences in each of the first sentence pairs in the *m\*n* first sentence pairs in Step 104 comprises: determining the correlation coefficient between the two sentences in each of the sentence pairs in the *m\*n* first sentence pairs based on the sentence correlation model.

Specifically, the pre-trained natural language model may be: a BERT model, a RoBERTa model, an ELMo model, a GPT series, an XLNet model, etc. The characteristic of the pre-trained natural language model is that it can perform simple pre-training tasks in a particularly huge corpus, for example, the masked language model task. Through long-term pre-training, the pre-trained natural language model can vectorize an input text with high quality. That is, when a text composed of N characters, words or placeholders is input to the pre-trained natural language model, N fixed-dimensional, context-sensitive vectors can be obtained through computation to correspond to the input text in a one-to-one manner. Then, through a specific fine-tuning task, some or all of the N vectors can be selectively used as the input of a new fine-tuning task. For example, a classifier is added to the top layer of the pre-trained natural language model, and then a sentence correlation model can be obtained through training.

It can be seen that, in the embodiments of the present invention, a pre-trained natural language model is trained to obtain a sentence correlation model, and then the sentence correlation model is used to determine the correlation coefficients of the first sentence pairs, thus improving the processing efficiency.

A predetermined corpus of texts can be segmented to generate second sentence pairs for training the sentence correlation model. Specifically, the second sentence pairs as the training data may be labeled manually or automatically. Automatic labeling is preferred in consideration that there is usually a large number of texts in the corpus.

In the automatic labeling method: when the two sentences in a second sentence pair belong to an identical text, the second sentence pair is automatically labeled as a positive example; and when the two sentences in a second sentence pair do not belong to an identical text, the second sentence pair is automatically labeled as a negative example. Therefore, in the embodiments of the present invention, the second sentence pairs can be quickly labeled by determining whether two sentences in a second sentence pair belong to the same text, thereby providing a fast automatic labeling method and improving the labeling efficiency.

Step 105: determining the similarity between the first text and the second text based on the correlation coefficients of the *m\*n* first sentence pairs.

Here, the similarity between the first text and the second text is determined based on the correlation coefficients of the *m\*n* first sentence pairs, thereby converting the similarity calculation at the sentence pair level to the similarity calculation at the text level.

In detail, the specific methods for determining the similarity between the first text and the second text based on the correlation coefficients of the *m\*n* first sentence pairs may include:

Method (1): determining the arithmetic mean of the correlation coefficients of the *m\*n* first sentence pairs as the similarity between the first text and the second text.
Method (2): determining the median of the correlation coefficients of the *m\*n* first sentence pairs as the similarity between the first text and the second text.
Method (3): determining the maximum value of the correlation coefficients of the *m\*n* first sentence pair as the similarity between the first text and the second text.
Method (4): determining the maximum value of the correlation coefficients of *n* first sentence pairs that contain any identical sentence in the *m* sentences, and determining the arithmetic mean of the *m* maximum values corresponding to the respective identical sentences as the similarity between the first text and the second text.

The above exemplarily describes some typical examples of determining the similarity between the first text and the second text based on the correlation coefficients of *m\*n* first sentence pairs. Those skilled in the art may realize that this description is only exemplary and is not used to limit the scope of the embodiments of the present invention.

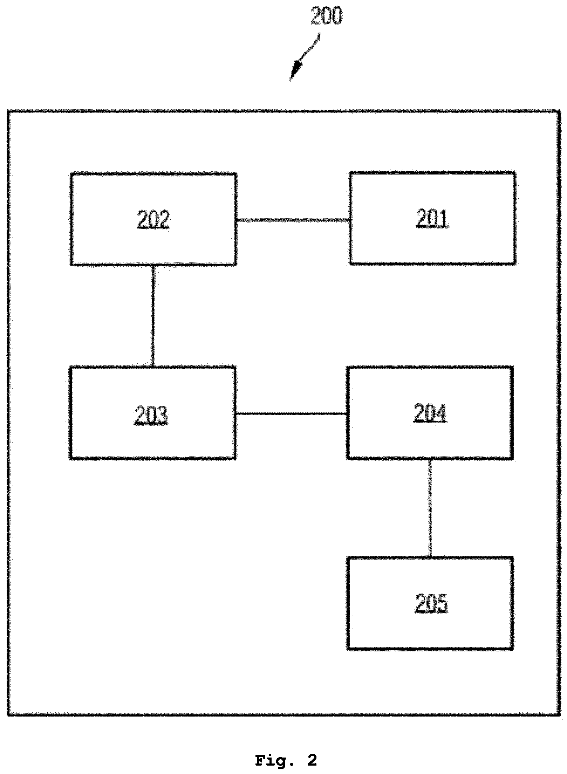

Figure 2 is an exemplary structural diagram of the text similarity determination apparatus of the embodiments of the present invention.

As shown in Figure 2, the text similarity determination apparatus 200 comprises:

A first segmenting module 201, used to segment a first text to generate $m$ sentences, wherein $m$ is a positive integer;

A second segmenting module 202, used to segment a second text to generate $n$ sentences, wherein $n$ is a positive integer;

A sentence pair determining module 203, used to determine $m*n$ first sentence pairs, wherein each of the first sentence pairs comprises any sentence in the $m$ sentences and any sentence in the $n$ sentences;

A correlation coefficient determining module 204, used to determine the correlation coefficient between the two sentences in each of the first sentence pairs in the $m*n$ first sentence pairs;

A similarity determining module 205, used to determine the similarity between the first text and the second text based on the correlation coefficients of the $m*n$ first sentence pairs.

In one embodiment, the text similarity determination apparatus 200 further comprises:

A labeling module (not shown in Figure 2), used to automatically label second sentence pairs as training data before the correlation coefficient determining module determines the correlation coefficient of each of the first sentence pairs in the $m*n$ first sentence pairs;

A training module (not shown in Figure 2), used to use the second sentence pairs that have been automatically labeled to train a pre-trained natural language model, to obtain a sentence correlation model;

The correlation coefficient determining module 204 is used to determine a correlation coefficient between the two sentences in each of the first sentence pairs in the $m*n$ first sentence pairs based on the sentence correlation model.

In one embodiment, the labeling module is used to, when the two sentences in a second sentence pair belong to an identical text, automatically label the second sentence pair as a positive example; and when the two sentences in a second sentence pair do not belong to an identical text, automatically label the second sentence pair as a negative example.

In one embodiment, the similarity determining module 205 is used to perform at least one of the following: determining an arithmetic mean of the correlation coefficients of the $m*n$ first sentence pairs as the similarity between the first text and the second text; determining a median of the correlation coefficients of the $m*n$ first sentence pairs as the similarity between the first text and the second text; determining a maximum value of the correlation coefficients of the $m*n$ first sentence pair as the similarity between the first text and the second text; determining a maximum value of the correlation coefficients of $n$ first sentence pairs that contain any identical sentence in the $m$ sentences, and determining an arithmetic mean of the $m$ maximum values corresponding to the respective identical sentences as the similarity between the first text and the second text, etc.

At present, there still seems to be no work related to industrial diagnosis systems based on searching. The embodiments of the present invention propose an industrial diagnosis system based on searching.

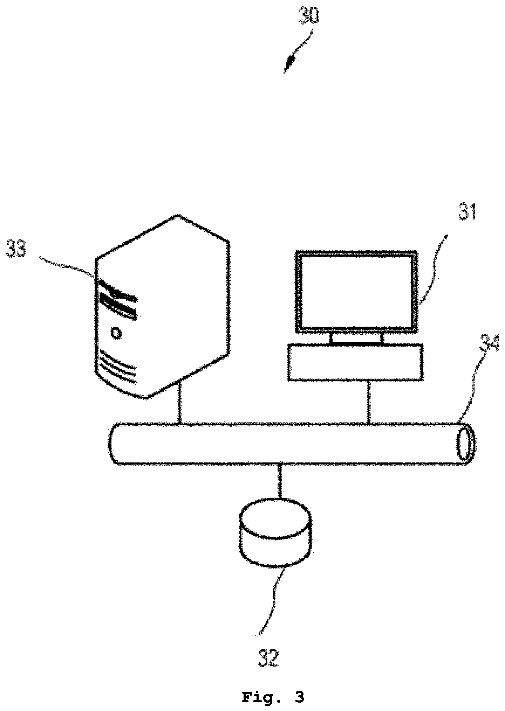

Figure 3 is an exemplary structural diagram of the industrial diagnosis system of the embodiments of the present invention.

As shown in Figure 3, the industrial diagnosis system 30 comprises:

A human-machine interface 31, used to receive an inquiry case text;

A historical case database 32, used to store $K$ historical case texts, wherein $K$ is a positive integer;

A processor 33, coupled respectively to the human-machine interface 31 and the historical case database 32 via a bus 34, and configured to:

Segment the inquiry case text to generate $m$ sentences, wherein $m$ is a positive integer; segment $k$ historical case texts to generate $n_k$ sentences, wherein $n_k$ is a positive integer, and the value range of $k$ is [1, $K$]; determine $m*n_k$ first sentence pairs, wherein each of the first sentence pairs comprises any sentence in the $m$ sentences and any sentence in the $n_k$ sentences; determine the correlation coefficient between the two sentences in each of the first sentence pairs in the $m*n_k$ first sentence pairs; determine the similarity between the inquiry case text and the kth historical case text based on the correlation coefficients of the $m*n_k$ first sentence pairs; rank the similarities between the inquiry case text and the $K$ historical case texts; and determine the historical case text from the $K$ historical case texts as the output based on the ranking result.

The user usually provides the inquiry case text to the industrial diagnosis system 30 based on the human-machine interface module 31. The fault currently encountered by the user is described in the inquiry case text. The failure symptoms, causes and solutions of historical cases are described in the historical case texts stored in the historical case database 32. The processor 33 can output a predetermined number (for example, 10 or 20) of historical case texts with the highest similarity to the inquiry case text based on the ranking result. Therefore, the user can refer to these historical case texts to quickly understand the causes and solutions of the fault currently encountered.

In one embodiment, the processor 33 is configured to:

Automatically label second sentence pairs as training data; and use the second sentence pairs that have been automatically labeled to train a pre-trained natural language model, to obtain a sentence correlation model; wherein determining the correlation coefficient between the two sentences in each of the first sentence pairs in the $m*n_k$ first sentence pairs comprises: determining the correlation coefficient between the two sentences in each of the sentence pairs in the $m*n_k$ first sentence pairs based on the sentence correlation model.

In one embodiment, the processor 33 is configured to: when the two sentences in a second sentence pair belong to an identical text, automatically label the second sentence pair as a positive example; and when the two sentences in a second sentence pair do not belong to an identical text, automatically label the second sentence pair as a negative example.

In one embodiment, the processor (33) is configured to:

(1) When $m$ is greater than the average sentence number $t$ of the $K$ historical case texts, determining the arithmetic mean of the correlation coefficients of the $m*n_k$ first sentence pairs as the similarity between the first text and the second text;

(2) Determining the median of the correlation coefficients of the $m*n_k$ first sentence pairs as the similarity between the first text and the second text;

(3) Determining the maximum value of the correlation coefficients of the $m*n_k$ first sentence pair as the similarity between the first text and the second text;

(4) When $m$ is smaller than or equal to the average sentence number $t$ of the $K$ historical case texts, determining the maximum value of the correlation coefficients of $n$ first sentence pairs that contain any identical sentence in the $m$ sentences, and determining the arithmetic mean of the $m$ maximum values corresponding to the respective identical sentences as the similarity between the first text and the second text.

For example, the following formula may be referenced:

$$R_{(Q,H)} = \begin{cases} \sum_{i=1}^{m} \sum_{j=1}^{n} Corr(q_i, h_j) / (m \times n), & \text{if } m > t; \\ \sum_{i=1}^{m} \max\{Corr(q_i, h_j), j \in [1, n]\} / m, & \text{if } m \leq t. \end{cases}$$

In the above equation, $Q$ is the inquiry case text; $H$ is the historical case texts; m is the total number of sentences segmented from $Q$; n is the total number of sentences segmented from $H$; i is the numbering of $m$; j is the numbering of $n$; $q_i$ is the $i$th sentence segmented from $Q$; $h_j$ is the $j$th sentence segmented from $H$; $(q_i, h_j)$ is the sentence pair composed of $q_i$ and $h_j$; $Corr(q_i, h_j)$ is the correlation coefficient of the sentence pair $(q_i, h_j)$; $R(Q,H)$ is the similarity between $Q$ and $H$; t is the average number of sentences of all the historical case texts.

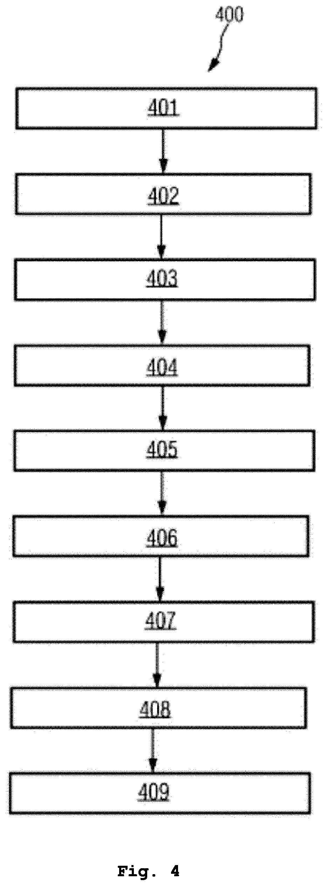

Figure 4 is an exemplary flowchart of the industrial diagnosis method of the embodiments of the present invention.

As shown in Figure 4, the method 400 comprises:

Step 401: receiving an inquiry case text.
Step 402: obtaining $K$ historical case texts from a historical case database, wherein $K$ is a positive integer.
Step 403: segmenting the inquiry case text to generate $m$ sentences, wherein $m$ is a positive integer.
Step 404: segmenting $k$ historical case texts to generate $n_k$ sentences, wherein $n_k$ is a positive integer, and the value range of $k$ is [1, $K$].
Step 405: determining $m*n_k$ first sentence pairs, wherein each of the first sentence pairs comprises any sentence in the m sentences and any sentence in the $n_k$ sentences.
Step 406: determining the correlation coefficient between the two sentences in each of the first sentence pairs in the $m*n_k$ first sentence pairs.
Step 407: determining the similarity between the inquiry case text and the $k$th historical case text based on the correlation coefficients of the $m*n_k$ first sentence pairs.
Step 408: ranking the similarities between the inquiry case text and the $K$ historical case texts.
Step 409: determining a historical case text from the $K$ historical case texts as an output based on the ranking result.

In one embodiment, before Step 406, the method further comprises: automatically labeling second sentence pairs as training data; and using the second sentence pairs that have been automatically labeled to train a pre-trained natural language model, to obtain a sentence correlation model; wherein determining the correlation coefficient between the two sentences in each of the first sentence pairs in the $m*n$ first sentence pairs comprises: determining the correlation coefficient between the two sentences in each of the sentence pairs in the $m*n$ first sentence pairs based on the sentence correlation model.

In one embodiment, automatically labeling second sentence pairs as training data comprises: when the two sentences in a second sentence pair belong to an identical text, automatically labeling the second sentence pair as a positive example; and when the two sentences in a second sentence pair do not belong to an identical text, automatically labeling the second sentence pair as a negative example.

In one embodiment, step 407 of determining the similarity between the inquiry case text and the $k$th historical case text based on the correlation coefficients of the $m*n_k$ first sentence pairs comprises: when m is greater than the average sentence number $t$ of the $K$ historical case texts, determining the arithmetic mean of the correlation coefficients of the $m*n_k$ first sentence pairs as the similarity between the first text and the second text; determining the median of the correlation coefficients of the $m*n_k$ first sentence pairs as the similarity between the first text and the second text; determining the maximum value of the correlation coefficients of the $m*nk$ first sentence pair as the similarity between the first text and the second text; when $m$ is smaller than or equal to the average sentence number $t$ of the $K$ historical case texts, determining the maximum value of the correlation coefficients of $n$ first sentence pairs that contain any identical sentence in the $m$ sentences, and determining the arithmetic mean of the m maximum values corresponding to the respective identical sentences as the similarity between the first text and the second text, etc.

The typical process of an industrial diagnosis process based on searching is described below.

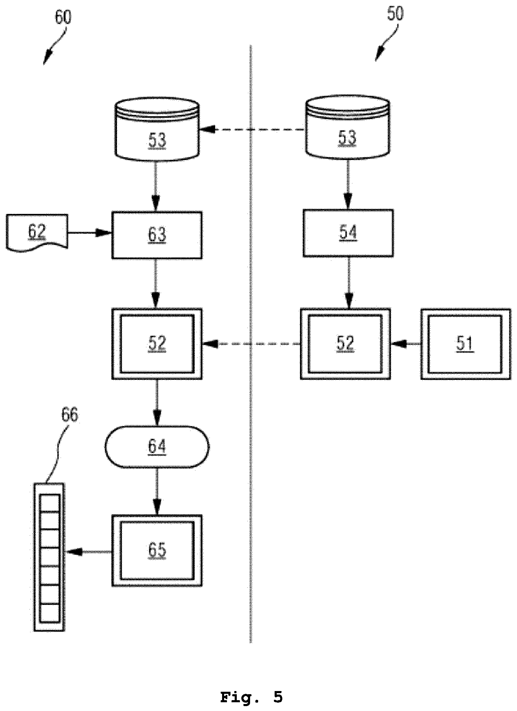

Figure 5 is an exemplary processing diagram of the industrial diagnosis process based on searching of the embodiments of the present invention.

The industrial diagnosis process comprises a model training stage 50 and an application stage 60. The model training stage 50 is executed before the application stage 60.

The model training stage 50 comprises: extracting one or more historical cases from a historical case database 53, segmenting each historical case into sentences respectively, and combining the sentences to form second sentence pairs 54, wherein, when two sentences in a second sentence pair 54 belong to the same historical case, the second sentence pair 54 is automatically labeled as a positive example, and when the two sentences in a second sentence pair 54 belong to different historical cases, the second sentence pair 54 is automatically labeled as a negative example. Then, with the second sentence pairs 54 (preferably, a plurality of second sentence pairs 54) as training data, training is performed on a pre-trained natural language model 51 to obtain a sentence correlation model 52.

The application stage 60 comprises: receiving an inquiry case text 62 through a human-machine interface. The inquiry case text 62 is segmented into $m$ sentences. $K$ historical case texts are extracted from the historical case database 53. For the extracted $k$ historical case texts (the value range of $k$ being [1, $K$]), the following steps are executed respectively: segmenting the $k$th historical case text to generate $n_k$ sentences; forming first sentence pairs 63 comprising any sentence in the $m$ sentences and any sentence in the $n_k$ sentences, to obtain $m*n_k$ first sentence pairs 63; using the sentence correlation model 52 to determine the correlation coefficient between the two sentences in each first sentence pair 63 in the $m*n_k$ first sentence pairs 63, i.e., the similarity coefficient 64 of a first sentence pair; determining the similarity 65 between the inquiry case text 62 and the $k$th historical case text based on the similarity coefficients 64 of the $m*n_k$ first sentence pairs. Next, the similarities between the inquiry case text 62 and all the $K$ historical case texts are ranked; a similar historical case text 66 is selected from the $K$ historical case texts as an output based on the ranking result. For example, the 10 historical case texts with the highest similarity are selected as similar historical case texts 66.

In Figure 5, the historical case database used in the application stage 60 and the historical case database used in the model training stage 50 are the same historical case database, which can facilitate rapid industrial deployment. In fact, the historical case database used in the application stage 60 and the historical case database used in the model training stage 50 may also be different historical case databases, which is not limited in the embodiments of the present invention.

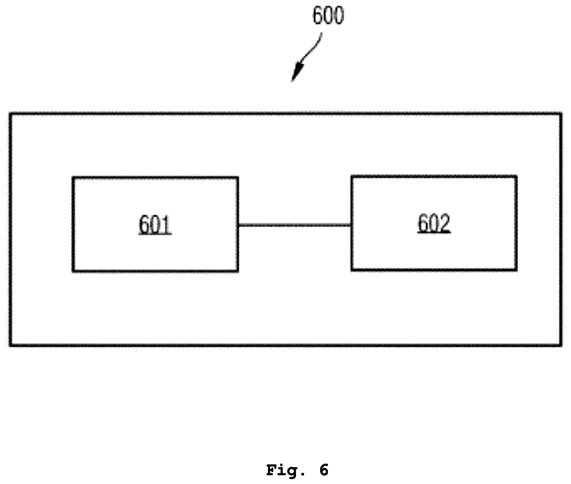

Figure 6 is an exemplary structural diagram of the text similarity determination apparatus of the embodiments of the present invention.

In Figure 6, the text similarity determination apparatus 600 comprises a memory 602 and a processor 601; an application program that can be executed by the processor 601 is stored in the memory 602, and is used to cause the processor 601 to execute the text similarity determination method as described in any of the paragraphs above.

It should be noted that not all steps and modules in the above flowcharts and structural diagrams are necessary, and some steps or modules can be ignored based on actual needs. The sequence of execution of the steps is not fixed, and can be adjusted as needed. A functional division of the modules is used only to facilitate the description. In an actual implementation, a module may be implemented by multiple modules, and the functions of multiple modules may be implemented by a single module. These modules may be located in a single device or in different devices.

The hardware modules in each embodiment may be implemented mechanically or electronically. For example, a hardware module may comprise specially designed permanent circuits or logic devices (for example, dedicated processors, such as FPGA or ASIC) to complete specific operations. A hardware module may also comprise programmable logic devices or circuits temporarily configured by software (for example, general-purpose processors or other programmable processors) for performing specific operations. Whether to specifically use mechanical methods or dedicated permanent circuits or temporarily configured circuits (such as software configuration) to implement hardware modules may be determined as claimed in cost and schedule considerations.

The present invention also provides a machine-readable storage medium, which stores an instruction used to cause a machine to execute the method described herein. Specifically, a system or device equipped with a storage medium may be provided, and the software program code for implementing the functions of any of the above embodiments is stored on the storage medium, so that a computer (or CPU or MPU) of the system or device reads and executes the program code stored in the storage medium. In addition, the operating system operating on the computer may also be used to perform part or all of the actual operations through instructions based on the program code. It is also possible to write the program code read from the storage medium to the memory provided in an expansion board inserted into the computer or to the memory provided in an expansion unit connected to the computer, and then the program code-based instructions cause the CPU, etc., mounted on the expansion board or the expansion unit to perform part and all of the actual operations, so as to implement the functions of any of the above embodiments.

Implementations of the storage media used to provide the program code include floppy disks, hard disks, magneto-optical disks, optical disks (such as CD-ROM, CD-R, CD-RW, DVD-ROM, DVD-RAM, DVD-RW, DVD+RW), magnetic tapes, non-volatile memory cards and ROMs. Optionally, the program code may be downloaded from a server computer or a cloud via a communication network.

The above are only the preferred embodiments of the present invention and are not used to limit the scope of the present invention. Any modification, equivalent replacement and improvement made without departing from the motivation and principle of the present invention shall be included in the scope of the present invention.

The present invention has been demonstrated and described in detail through the drawings and preferred embodiments above. However, the present invention is not limited to these disclosed embodiments. Based on the above embodiments, those skilled in the art can know that the code review methods in the different embodiments above may be combined to obtain more embodiments of the present invention, and these embodiments also fall within the scope of the present invention.

**Claims**

1. A text similarity determination method (100), **characterized in that** it comprises:

    segmenting (101) a first text to generate $m$ sentences, wherein $m$ is a positive integer;
    segmenting (102) a second text to generate $n$ sentences, wherein $n$ is a positive integer;
    determining (103) $m*n$ first sentence pairs, wherein each of the first sentence pairs comprises any sentence in the $m$ sentences and any sentence in the $n$ sentences;
    determining (104) a correlation coefficient between the two sentences in each of the first sentence pairs in the $m*n$ first sentence pairs;
    and determining (105) a similarity between the first text and the second text based on the correlation coefficients of the $m*n$ first sentence pairs.

2. The text similarity determination method (100) as claimed in claim 1, **characterized in that**, before determining (104) a correlation coefficient of each sentence pair in the $m*n$ first sentence pairs, the method (100) further comprises:

    automatically labeling second sentence pairs as training data, and
    using the second sentence pairs that have been automatically labeled to train a pre-trained natural language model, to obtain a sentence correlation model,
    wherein determining (104) a correlation coefficient between the two sentences in each of the first sentence pairs in the $m*n$ first sentence pairs comprises: determining a correlation coefficient between the two sentences in each of the sentence pairs in the $m*n$ first sentence pairs based on the sentence correlation model.

3. The text similarity determination method (100) as claimed in claim 2, **characterized in that** automatically labeling second sentence pairs as training data comprises:

    when the two sentences in a second sentence pair belong to an identical text, automatically labeling the second sentence pair as a positive example, and
    when the two sentences in a second sentence pair do not belong to an identical text, automatically labeling the second sentence pair as a negative example.

4. The text similarity determination method (100) as claimed in claim 1, **characterized in that** determining (105) a similarity between the first text and the second text based on the correlation coefficients of the $m*n$ first sentence pairs comprises at least one of the following:

   determining an arithmetic mean of the correlation coefficients of the $m*n$ first sentence pairs as the similarity between the first text and the second text;
   determining a median of the correlation coefficients of the $m*n$ first sentence pairs as the similarity between the first text and the second text;
   determining a maximum value of the correlation coefficients of the $m*n$ first sentence pair as the similarity between the first text and the second text;
   determining a maximum value of the correlation coefficients of $n$ first sentence pairs that contain any identical sentence in the m sentences, and determining an arithmetic mean of the $m$ maximum values corresponding to the respective identical sentences as the similarity between the first text and the second text.

5. A text similarity determination apparatus (200), **characterized in that** it comprises:

   a first segmenting module (201), used to segment a first text to generate $m$ sentences, wherein $m$ is a positive integer;
   a second segmenting module (202), used to segment a second text to generate $n$ sentences, wherein $n$ is a positive integer;
   a sentence pair determining module (203), used to determine $m*n$ first sentence pairs, wherein each of the first sentence pairs comprises any sentence in the $m$ sentences and any sentence in the $n$ sentences;
   a correlation coefficient determining module (204), used to determine a correlation coefficient between the two sentences in each of the first sentence pairs in the $m*n$ first sentence pairs;
   a similarity determining module (205), used to determine a similarity between the first text and the second text based on the correlation coefficients of the $m*n$ first sentence pairs.

6. The text similarity determination apparatus (200) as claimed in claim 5, **characterized in that** it further comprises:

   a labeling module, used to automatically label second sentence pairs as training data before the correlation coefficient determining module (204) determines a correlation coefficient of each of the first sentence pairs in the $m*n$ first sentence pairs, and
   a training module, used to use the second sentence pairs that have been automatically labeled to train a pre-trained natural language model, to obtain a sentence correlation model,
   wherein, the correlation coefficient determining module (204) is used to determine a correlation coefficient between the two sentences in each of the first sentence pairs in the $m*n$ first sentence pairs based on the sentence correlation model.

7. The text similarity determination apparatus (200) as claimed in claim 6, **characterized in that**
   the labeling module is used to, when the two sentences in a second sentence pair belong to an identical text, automatically label the second sentence pair as a positive example; and when the two sentences in a second sentence pair do not belong to an identical text, automatically label the second sentence pair as a negative example.

8. The text similarity determination apparatus (200) as claimed in claim 5, **characterized in that**
   the similarity determining module (205) is used to perform at least one of the following:

   determining an arithmetic mean of the correlation coefficients of the $m*n$ first sentence pairs as the similarity between the first text and the second text;
   determining a median of the correlation coefficients of the $m*n$ first sentence pairs as the similarity between the first text and the second text;
   determining a maximum value of the correlation coefficients of the $m*n$ first sentence pair as the similarity between the first text and the second text;
   determining a maximum value of the correlation coefficients of $n$ first sentence pairs that contain any identical sentence in the $m$ sentences, and determining an arithmetic mean of the $m$ maximum values corresponding to the respective identical sentences as the similarity between the first text and the second text.

9. An industrial diagnosis system (30), **characterized in that** it comprises:

a human-machine interface (31), used to receive an inquiry case text;
a historical case database (32), used to store $K$ historical case texts, wherein $K$ is a positive integer;
a processor (33), coupled respectively to the human-machine interface (31) and the historical case database (32), and configured to:
segment the inquiry case text to generate $m$ sentences, wherein $m$ is a positive integer; segment $k$ historical case texts to generate $n_k$ sentences, wherein $n_k$ is a positive integer, and the value range of $k$ is [1, $K$]; determine $m*n_k$ first sentence pairs, wherein each of the first sentence pairs comprises any sentence in the $m$ sentences and any sentence in the $n_k$ sentences; determine a correlation coefficient between the two sentences in each of the first sentence pairs in the $m*n_k$ first sentence pairs; determine a similarity between the inquiry case text and a $k$th historical case text based on the correlation coefficients of the $m*n_k$ first sentence pairs; rank the similarities between the inquiry case text and the $K$ historical case texts; and determine a historical case text from the $K$ historical case texts as an output based on the ranking result.

10. The industrial diagnosis system (30) as claimed in claim 9, **characterized in that**
the processor (33) is configured to:

automatically label second sentence pairs as training data, and use the second sentence pairs that have been automatically labeled to train a pre-trained natural language model, thereby obtaining a sentence correlation model,
wherein determining a correlation coefficient between the two sentences in each of the first sentence pairs in the $m*n_k$ first sentence pairs comprises: determining a correlation coefficient between the two sentences in each of the sentence pairs in the $m*n_k$ first sentence pairs based on the sentence correlation model.

11. The industrial diagnosis system (30) as claimed in claim 10, **characterized in that**
the processor (33) is configured to: when the two sentences in a second sentence pair belong to an identical text, automatically label the second sentence pair as a positive example; and when the two sentences in a second sentence pair do not belong to an identical text, automatically label the second sentence pair as a negative example.

12. The industrial diagnosis system (30) as claimed in claim 10, **characterized in that**
the processor (33) is configured to perform at least one of the following:

when $m$ is greater than the average sentence number $t$ of the $K$ historical case texts, determining an arithmetic mean of the correlation coefficients of the $m*n_k$ first sentence pairs as the similarity between the first text and the second text;
determining a median of the correlation coefficients of the $m*n_k$ first sentence pairs as the similarity between the first text and the second text;
determining a maximum value of the correlation coefficients of the $m*n_k$ first sentence pair as the similarity between the first text and the second text;
when $m$ is smaller than or equal to the average sentence number t of the $K$ historical case texts, determining a maximum value of the correlation coefficients of $n$ first sentence pairs that contain any identical sentence in the m sentences, and determining an arithmetic mean of the $m$ maximum values corresponding to the respective identical sentences as the similarity between the first text and the second text.

13. An industrial diagnosis method (400), **characterized in that** it comprises:

receiving (401) an inquiry case text;
obtaining (402) $K$ historical case texts from a historical case database, wherein $K$ is a positive integer;
segmenting (403) the inquiry case text to generate $m$ sentences, wherein $m$ is a positive integer;
segmenting (404) $k$ historical case texts to generate $n_k$ sentences, wherein $n_k$ is a positive integer, and a value range of $k$ is [1, $K$];
determining (405) $m*n_k$ first sentence pairs, wherein each of the first sentence pairs comprises any sentence in the $m$ sentences and any sentence in the $n_k$ sentences;
determining (406) a correlation coefficient between the two sentences in each of the first sentence pairs in the $m*n_k$ first sentence pairs;
determining (407) a similarity between the inquiry case text and a $k$th historical case text based on the correlation coefficients of the $m*n_k$ first sentence pairs;

ranking (408) the similarities between the inquiry case text and the $K$ historical case texts;
determining (409) a historical case text from the $K$ historical case texts as an output based on the ranking result.

14. The industrial diagnosis method (400) as claimed in claim 13, **characterized in that**, before determining (406) a correlation coefficient of each sentence pair in the $m*n$ first sentence pairs, the method further comprises:

automatically labeling second sentence pairs as training data, and
using the second sentence pairs that have been automatically labeled to train a pre-trained natural language model, to obtain a sentence correlation model,
wherein determining a correlation coefficient between the two sentences in each of the first sentence pairs in the $m*n$ first sentence pairs comprises: determining a correlation coefficient between the two sentences in each of the sentence pairs in the $m*n$ first sentence pairs based on the sentence correlation model.

15. The industrial diagnosis method (400) as claimed in claim 14, **characterized in that** automatically labeling second sentence pairs as training data comprises:

when the two sentences in a second sentence pair belong to an identical text, automatically labeling the second sentence pair as a positive example;
when the two sentences in a second sentence pair do not belong to an identical text, automatically labeling the second sentence pair as a negative example.

16. The industrial diagnosis method (400) as claimed in claim 13, **characterized in that** determining (407) a similarity between the inquiry case text and a kth historical case text based on the correlation coefficients of the $m*n_k$ first sentence pairs comprises at least one of the following:

when $m$ is greater than the average sentence number t of the $K$ historical case texts, determining an arithmetic mean of the correlation coefficients of the $m*n_k$ first sentence pairs as the similarity between the first text and the second text;
determining a median of the correlation coefficients of the $m*n_k$ first sentence pairs as the similarity between the first text and the second text;
determining a maximum value of the correlation coefficients of the $m*n_k$ first sentence pair as the similarity between the first text and the second text;
when $m$ is smaller than or equal to the average sentence number t of the $K$ historical case texts, determining a maximum value of the correlation coefficients of $n$ first sentence pairs that contain any identical sentence in the $m$ sentences, and determining an arithmetic mean of the $m$ maximum values corresponding to the respective identical sentences as the similarity between the first text and the second text.

17. A text similarity determination apparatus (600), **characterized in that** it comprises a processor (601) and a memory (602); the memory (602) stores an application program that can be executed by the processor (601), which is used to cause the processor (601) to execute the text similarity determination method as claimed in any of claims 1 to 4.

18. A computer-readable storage medium, **characterized in that** a computer-readable instruction is stored therein, and the computer-readable instruction is used to execute the text similarity determination method as claimed in any of claims 1 to 4.

100

```
┌─────────────────────────────────────┐
│                                     │
│                 101                 │
│                                     │
└─────────────────────────────────────┘
                   │
                   ▼
┌─────────────────────────────────────┐
│                                     │
│                 102                 │
│                                     │
└─────────────────────────────────────┘
                   │
                   ▼
┌─────────────────────────────────────┐
│                                     │
│                 103                 │
│                                     │
└─────────────────────────────────────┘
                   │
                   ▼
┌─────────────────────────────────────┐
│                                     │
│                 104                 │
│                                     │
└─────────────────────────────────────┘
                   │
                   ▼
┌─────────────────────────────────────┐
│                                     │
│                 105                 │
│                                     │
└─────────────────────────────────────┘
```

Fig. 1

Fig. 2

Fig. 3

400

| 401 |
| --- |

| 402 |
| --- |

| 403 |
| --- |

| 404 |
| --- |

| 405 |
| --- |

| 406 |
| --- |

| 407 |
| --- |

| 408 |
| --- |

| 409 |
| --- |

Fig. 4

Fig. 5

600

601

602

Fig. 6

## INTERNATIONAL SEARCH REPORT

| International application No. |
|---|
| **PCT/CN2020/118172** |

**A. CLASSIFICATION OF SUBJECT MATTER**

G06F 16/00(2019.01)i

According to International Patent Classification (IPC) or to both national classification and IPC

**B. FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNPAT, EPODOC, WPI, CNKI, IEEE: 文本, 文章, 段落, 分割, 分句, 句子, 对, 组合, 两两, 之间, 句对, 相似, 类似; text, paragraph, passage, segment, sentence, pair, double, similar, between

**C. DOCUMENTS CONSIDERED TO BE RELEVANT**

| Category* | Citation of document, with indication, where appropriate, of the relevant passages | Relevant to claim No. |
|---|---|---|
| X | US 7778817 B1 (INTEL CORPORATION) 17 August 2010 (2010-08-17) claims 1-20, description column 1 line 25 to column 6 line 14, figures 1-4 | 1-18 |
| X | JP 2018036725 A (NIPPON TELEGRAPH & TELEPHONE CORPORATION) 08 March 2018 (2018-03-08) claims 1-18, description paragraphs [0004]-[0089], figures 1-4 | 1-18 |
| A | CN 106202055 A (HUNAN ANTVISION SOFTWARE CO., LTD.) 07 December 2016 (2016-12-07) entire document | 1-18 |
| A | CN 111368037 A (PING AN TECHNOLOGY (SHENZHEN) CO., LTD.) 03 July 2020 (2020-07-03) entire document | 1-18 |
| A | CN 109145299 A (BEIJING KINGSOFT SECURITY SOFTWARE CO., LTD.) 04 January 2019 (2019-01-04) entire document | 1-18 |
| A | CN 109033413 A (SHANGHAI UNIVERSITY et al.) 18 December 2018 (2018-12-18) entire document | 1-18 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 June 2021** | **07 July 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/118172**

| Patent document cited in search report | | | Publication date (day/month/year) | Patent family member(s) | | | Publication date (day/month/year) |
|---|---|---|---|---|---|---|---|
| US | 7778817 | B1 | 17 August 2010 | US | 2012123768 | A1 | 17 May 2012 |
| | | | | US | 8650025 | B2 | 11 February 2014 |
| | | | | AU | 7639800 | A | 15 April 2002 |
| | | | | WO | 0229618 | A1 | 11 April 2002 |
| | | | | US | 2010332219 | A1 | 30 December 2010 |
| | | | | US | 8117025 | B2 | 14 February 2012 |
| JP | 2018036725 | A | 08 March 2018 | JP | 6665061 | B2 | 13 March 2020 |
| CN | 106202055 | A | 07 December 2016 | None | | | |
| CN | 111368037 | A | 03 July 2020 | None | | | |
| CN | 109145299 | A | 04 January 2019 | None | | | |
| CN | 109033413 | A | 18 December 2018 | None | | | |

Form PCT/ISA/210 (patent family annex) (January 2015)

**REFERENCES CITED IN THE DESCRIPTION**

**Patent documents cited in the description**

- US 5463768 A